# EUROPÄISCHE PATENTANMELDUNG

(11) **EP 1 341 067 A2**
(43) Veröffentlichungstag der Anmeldung: **03.09.2003**
(21) Anmeldenummer: 03002880.7
(22) Anmeldetag: 08.02.2003
(51) Int. Cl.: G05D 1/02

(54) **Automatisiertes Strassenverkehrssystem**

(30) Priorität: 27.02.2002 DE 10208439
(71) Anmelder: Eichholz, Willi, 40724 Hilden (DE)
(72) Erfinder: Eichholz, Willi, 40724 Hilden (DE)

(57) **Zusammenfassung**

Ein Verkehrssystem auf der Basis von automatisiert fahrenden, lenkbaren Straßenfahrzeugen, wobei auf beiden Seiten einer Fahrspur (-2-) Seitenbegrenzungen (Leitplanken) (-3- und -4-) angebracht sind und die Fahrzeuge sich somit quasi in einer U-förmigen Schiene bewegen, wodurch erreicht wird, daß die Fahrzeuge bei einem Technikversagen auf der Trasse gehalten werden können, eine Abgrenzung gegenüber Personen besteht und diese Seitenbegrenzungen zur Wegfindung und -orientierung der Fahrzeuge genutzt werden können.

## Beschreibung

Im folgenden wird ein Teilaspekt der Möglichkeit eines automatisierten, autonomen Verkehrssystems beschrieben, welcher durch das Zusammenwirken von modifizierten, autonomen Fahrspuren und modifizierten Straßenfahrzeugen erreicht wird.

Es gibt vielfache Überlegungen mittels geeigneter technischer Hilfsmittel den Fahrer beim Autofahren von Routinehandlungen zu entlasten und zu befreien.

Die Möglichkeit, handgesteuerte und vollautomatisch gesteuerte Fahrzeuge in Kombination miteinander verkehren zu lassen, erscheint sehr problematisch, da ein derartiges System immer mit der Unvollkommenheit menschlicher Handlungsweisen behaftet wäre.

Deshalb wird für vollautomatisierte Straßenfahrzeuge ein eigenes, autonomes Trassenund Wegesystem vorgeschlagen.

Fig. 1 zeigt einen Personenwagen -1- auf einer derartigen Trasse ―2-.

Fig. 2 zeigt einen Lastkraftwagen -17- auf einer derartigen Trasse -11-.

Fig. 3 zeigt in der Draufsicht Straßenfahrzeuge beim Befahren einer Abzweigung.

Fig.4 zeigt ein mehrspuriges Bahnsystem.

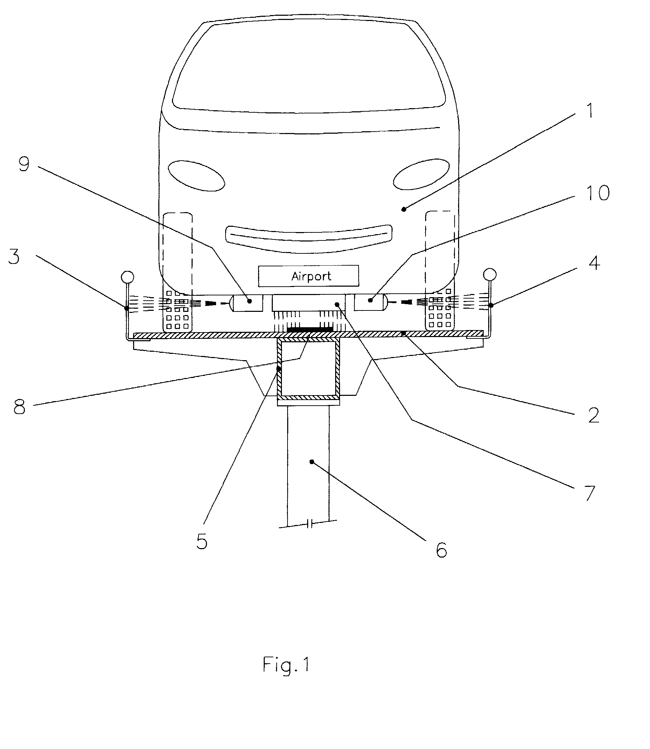

Gemäß Fig. 1 befahren automatisch gelenkte Straßenfahrzeuge -1-, Fahrbahnen (Fahrspuren, -trassen ...) -2-, welche mit Seitenbegrenzungen (Leitplanken) -3- und -4-versehen sind.

Ein derartiges System könnte vorzugsweise in aufgeständerter Bauweise, mit Tragebalken -5- und Säulen -6- errichtet werden.

Zur Wegfindung können einerseits Abstandsmeßsensoren -9- und -10- den Abstand zu den Seitenbegrenzungen -3- und -4- ausmessen und diese Informationen der Lenksteuerung zur Verfügung stellen.

Andererseits kann ähnlich der Kantensteuerung bei Wickelvorgängen von Papier-, Textilbahnen u.dgl. auf der Fahrbahn eine Spur -8- aufgebracht sein, welche von einem berührungslos arbeitenden Sensoren -7- abgetastet wird.

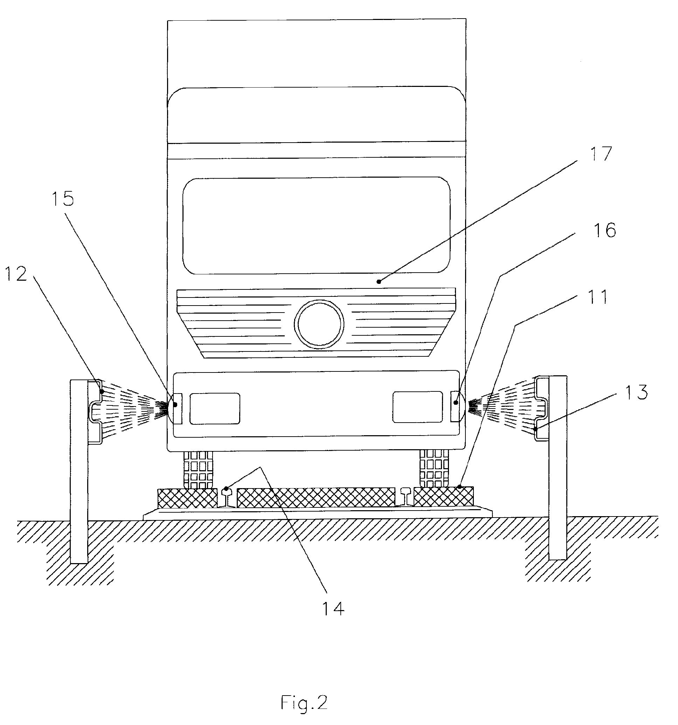

Fig. 2 zeigt eine identische Situation bei der am Lastkraftwagen -17- angebrachte Abstandsmeßsensoren -15- und -16- den Abstand zu den Leitplanken -12- und -13-erfassen.

Der Lastkraftwagen -17- befährt die Fahrspur -11-, welche vorzugsweise auf vorhandenen oder aufgegebenen Eisenbahntrassen aufgebracht wurde.

Sind Eisenbahnschienen -14- in dieser Fahrbahn -11- integriert, ergibt sich eine bifunktionale Nutzung der Trasse, sowohl durch Eisenbahnen wie durch Lastkraftwagen.

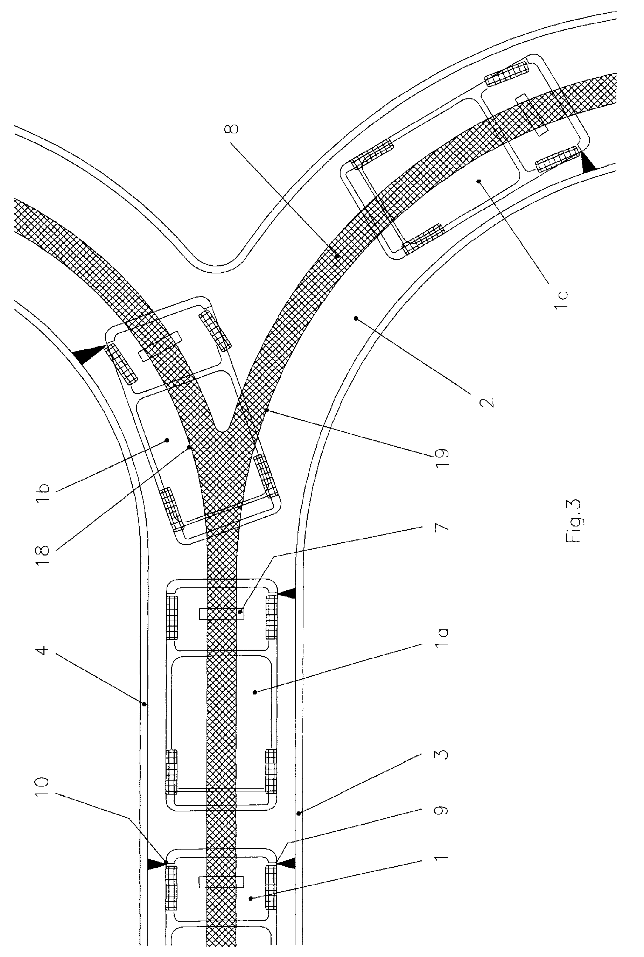

In Fig.3 ist das Befahren einer Abzweigung bei einem derartigen Streckensystem dargestellt.

Die Fahrbahn -2- weist links und rechts die Seitenbegrenzungen -3- und -4- auf.

Das Befahren von Abzweigungen erfolgt nach folgendem Schema:

Fährt man auf einer Autobahn der linken Leitplanke -4- nach, bleibt man auf der entsprechenden Autobahn; fährt man hingegen der rechten Leitplanke -3- nach, verläßt man diese Autobahn, um auf einen Parkplatz zu fahren, abzufahren oder um auf eine andere Autobahn zu wechseln.

Derartiges läßt sich mit den Abstandsmeßsensoren -9- und -10- nachbilden, indem man die Meßwerte des einen oder des anderen Sensors nutzt um der jeweils gewünschten Fahrtrichtung den Vorrang zu geben.

In identischer Weise lassen sich an Abzweigungen die durchlaufenden Kanten -18- und -19- von auf der Fahrbahn -2- aufgebrachten Bahnmarkierungen (Spuren) -8- mittels Sensoren -7- abtasten.

Zum Beispiel lassen sich mit einer gewissen Anzahl von optischen, induktiven oder dgl. Sensoren, welche den Kantenbereich - 18 - und - 19-der Bahnmarkierungen innerhalb und außerhalb der Markierung erfassen, sich Informationen zum Einwirken auf die Lenkung gewinnen.

Die Fahrzeuge -1a- und -1c- fahren nach rechts ab; Fahrzeug -1b- fährt nach links ab.

Das Fahrzeug -1- nutzt noch die Möglichkeit, beide Seitenbegrenzungen zur Orientierung heranziehen zu können.

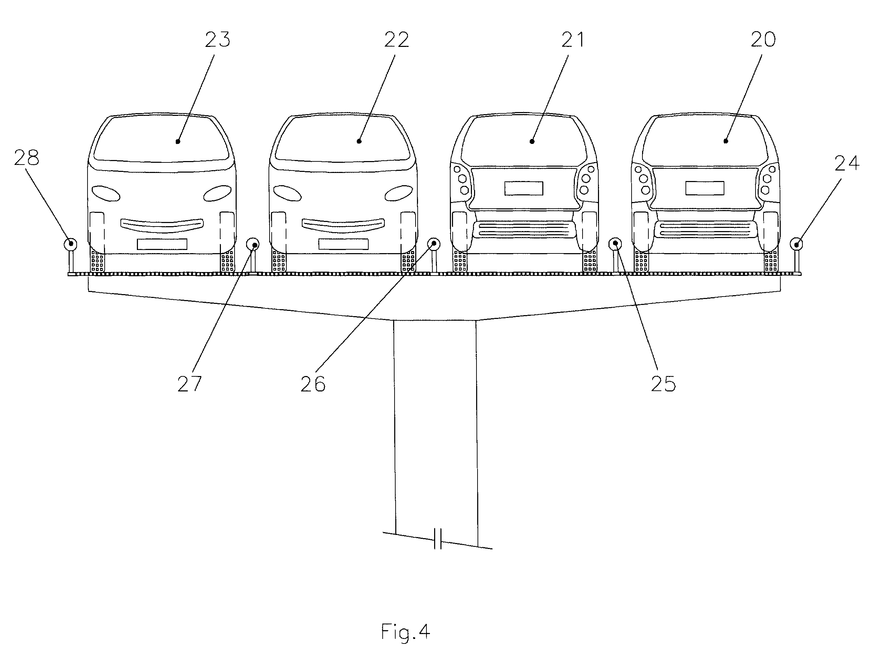

Fig.4 zeigt eine mehrspurige Fahrbahnanordnung.

Die Fahrzeuge -20- und -21- fahren in die eine und die Fahrzeuge -22- und -23- in die andere Richtung.

Jede Fahrspur weist auf jeder Seite eine Seitenbegrenzung ( -24- bis -28- ) auf.

Die auf einem derartigen Wegesystem abzufahrenden Strecken lassen sich auch in einem elektronischen Gedächtnis abspeichern:

Vom Start bis zum Ziel sind abzufahren: x Meter mit Lenkeinschlag 0 Grad, y Meter mit Lenkeinschlag ⁺z Grad, usw.

Diese Informationen können zur Kontrolle der Richtigkeit des Fahrweges herangezogen werden, z.B. beim Befahren von Abzweigungen und Einmündungen, wo der volle Leitplankenschutz nicht komplett vorhanden ist.

Für auf derartigen Verkehrssystemen genutzte Fahrzeuge bietet sich der Elektroantrieb der Fahrzeuge mit Versorgung über eine Stromschiene an.

Derartiges wird an anderer Stelle beschrieben.

## Patentansprüche

1. Ein Verkehrssystem auf der Basis von automatisiert fahrenden, lenkbaren Straßenfahrzeugen,
**dadurch gekennzeichnet,**
**daß** auf beiden Seiten einer jeden Fahrspur ( -2- ) dieses Verkehrssystems Seitenbegrenzungen (Leitplanken) ( -3- und -4- ) angebracht sind und die Fahrzeuge sich somit quasi in einer U-förmigen Schiene bewegen, wodurch erreicht wird, daß die Fahrzeuge bei einem Technikversagen auf der Trasse gehalten werden können, eine Abgrenzung gegenüber Personen besteht und diese Seitenbegrenzungen zur Wegfindung und -orientierung der Fahrzeuge genutzt werden können.

2. Ein Verkehrssystem nach Anspruch 1,
**dadurch gekennzeichnet,**
**daß** auf den Fahrbahnen -2-; Spuren -8- zur berührungslos abtastbaren Wegorientierung angebracht sein können.

3. Ein Verkehrssystem nach Anspruch 1,
**dadurch gekennzeichnet,**
**daß** die auf einem derartigen Verkehrssystem verkehrenden Fahrzeuge ( -1-; -17- ) mit berührungslos arbeitender Sensorik ( Laser-, Ultraschall- und Infrarot-Abstandsmessung, optischer Kantenerfassung u.dgl.) -7-; -9-; -10-; -15-; -16- zur Abstands- oder Spurabtastung bzw. mit beiden Möglichkeiten ausgerüstet sind, wodurch Informationen für die Steuerung des Lenkantriebes zur Verfügung stehen.

4. Ein Verkehrssystem nach Anspruch 1,
**dadurch gekennzeichnet,**
**daß** in zusätzlicher (redundanter) Weise die Geometrie des Streckennetzes ( x km mit Lenkeinschlag: 0 Grad; y Meter mit Lenkeinschlag: -z Grad; usw. ) im Fahrzeug abgespeichert werden kann und mit den abgetasteten Istwerten verglichen werden kann.
